# Europäisches Patentamt
# European Patent Office
# Office européen des brevets

(11) Numéro de publication: **0 091 355**
**B1**

---

(12) **FASCICULE DE BREVET EUROPÉEN**

---

(45) Date de publication du fascicule du brevet:
**03.09.86**

(21) Numéro de dépôt: **83400639.7**

(22) Date de dépôt: **28.03.83**

(51) Int. Cl.⁴: **B 01 D 53/02**

---

(54) **Procédé et dispositif pour réaliser notamment des économies d'énergie dans la régénération des charbons actifs contenant des solvants adsorbés.**

---

(30) Priorité: **02.04.82 FR 8205804**

(43) Date de publication de la demande:
**12.10.83 Bulletin 83/41**

(45) Mention de la délivrance du brevet:
**03.09.86 Bulletin 86/36**

(84) Etats contractants désignés:
**AT BE CH DE FR GB IT LI LU NL SE**

(56) Documents cité:
**CH-A-559 058**
**FR-A-605 304**
**FR-A-870 381**

(73) Titulaire: **T.G.I. Traitement de Gaz et Génie Industriel, 284 rue de la Garenne, F-92003 Nanterre (FR)**

(72) Inventeur: **Giannesini, Didier, 103 av. du Belvédère Bâtiment A, F-93310 Le Pres Saint Gervais (FR)**

(74) Mandataire: **Combe, André, CABINET BEAU DE LOMENIE 55 rue d'Amsterdam, F-75008 Paris (FR)**

---

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

## Description

La présente invention concerne un procédé et un dispositif pour réaliser des économies d'énergie dans la désorption de charbons actifs contenant des solvants adsorbés.

Dans les procédés de récupération de solvants volatils à l'aide de charbon actif on régénère ensuite le charbon par traitement de ce charbon par de la vapeur d'eau. La quantité de vapeur d'eau utilisée est comprise entre 3 et 8 kg de vapeur par kg de solvant récupéré.

La vapeur d'eau sortant de l'appareil où a eu lieu la désorption du charbon actif est condensée et admise dans un décanteur où a lieu une démixion entre l'eau et le solvant lorsque ces deux constituants ne sont pas miscibles. Lorsque le solvant récupéré est miscible avec l'eau le décanteur est remplacé par un système de séparation approprié tel que distillation, extraction liquide-liquide... Le solvant est récupéré et l'eau peut être recyclée dans la chaudière où l'on produit la vapeur servant, notamment au traitement de régénération du charbon actif.

Or, au cours de ce recyclage l'eau doit être traitée car très généralement elle peut contenir une quantité de solvant qui serait suffisante pour encrasser ladite chaudière.

Il a été trouvé maintenant et c'est l'objet de la présente invention que dans le cadre d'un procédé de récupération d'un solvant adsorbé sur un charbon par traitement dans un adsorbeur (lequel dans la phase du procédé selon le présente invention est utilisé comme dispositif désorbeur) à l'aide de vapeur d'eau avec condensation des vapeurs sortant dudit adsorbeur, décantation et recyclage de l'eau provenant de ladite décantation, il était très avantageux:

- de récupérer une part notable des calories contenues dans les vapeurs sortant dudit adsorbeur en faisant passer ces vapeurs dans un échangeur thermique indirect produisant de la vapeur d'eau impure à une pression comprise entre 0,1 et 1 bar;

- et d'utiliser l'eau impure provenant de la décantation pour alimenter ledit échangeur indirect.

On remarquera immédiatement que la vapeur produite sous une pression comprise entre 0,1 et 1 bar avec ledit échangeur thermique peut très avantageusement être recyclée dans la vapeur, provenant de la chaudière, utilisée pour le traitement du charbon actif dans l'adsorbeur. Cependant, compte tenu de ce que la vapeur provenant dudit échangeur thermique est à une pression inférieure à la pression atmosphérique et que la pression de la vapeur provenant de la chaudière est de l'ordre de 5 à 8 bars on utilisera, lors du mélange de ces deux vapeurs, un dispositif de compression provoquant l'entraînement, par la vapeur provenant de la chaudière, de la vapeur provenant de l'échangeur thermique indirect.

Quant à l'utilisation d'eau impure provenant de la décantation pour alimenter ledit échangeur indirect, il est possible de la réaliser selon deux méthodes:

- dans la première méthode on n'utilisera qu'une partie de cette eau impure pour alimenter l'échangeur indirect; dans ce cas la partie d'eau impure non utilisée dans l'échangeur indirect sera de préférence traitée et renvoyée après purification dans la chaudière de production de vapeur d'eau. Il est clair que dans ce cas on n'aura à traiter qu'une partie de l'eau impure recyclée dans l'installation.

- dans une deuxième méthode on utilisera la totalité de l'eau impure pour alimenter l'échangeur indirect; dans ce cas, l'expérience prouve que, lorsque l'impureté présente dans l'eau impure est plus volatile que l'eau, l'échangeur indirect lui-même est utilisable comme dispositif d'épuration de l'eau, si bien que l'eau condensée liquide extraite à la base d'un tel échangeur est suffisamment purifiée pour être directement admise dans la chaudière où elle se vaporisera.

Le procédé selon l'invention utilisable pour la regénération d'un charbon actif contenant au moins un solvant adsorbé, procédé selon lequel on traite dans un adsorbeur ledit charbon actif par de la vapeur d'eau avec condensation des vapeurs sortant dudit adsorbeur, décantation du produit condensé et recyclage de l'eau provenant de la décantation, est caractérisé en ce que:

- les vapeurs provenant dudit adsorbeur passent dans un échangeur indirect dans lequel elles cèdent une part de leurs calories à une eau impure en produisant de la vapeur d'eau impure à une pression comprise entre 0,1 et 1 bar, ladite vapeur étant reprise par un éjecteur et recyclée dans ledit adsorbeur,

- et l'on alimente ledit échangeur indirect avec de l'eau impure provenant du décanteur dans lequel ladite décantation a été réalisée.

Le procédé selon l'invention présente les avantages essentiels suivants:

- il permet la récupération, au niveau le meilleur possible, des calories contenues dans les vapeurs sortant de l'adsorbeur;

- il permet dans tous les cas de réaliser une économie d'énergie sur l'épurateur d'eau généralement nécessaire dans l'installation; en effet, soit on utilisera l'échangeur indirect comme purificateur, soit on n'aura à soumettre à un dispositif de purification qu'une fraction assez faible de l'eau impure;

- il permet également de ne vaporiser, dans la chaudière, qu'une faible quantité d'eau, cette faible quantité n'étant en effet que l'eau d'appoint destinée à produire de la vapeur entraînant les vapeurs provenant de l'échangeur thermique indirect.

Le procédé selon l'invention ne fonctionne effectivement (avec chauffage et vaporisation de l'eau impure amenée dans l'échangeur indirect) que lorsque le charbon actif a été suffisamment chauffé pour que la vapeur sortant du désorbeur puisse céder une part notable de ses calories à ladite eau impure. Mais on sait que le procédé de désorption du charbon par la vapeur est essentiellement un procédé discontinu consistant à charger le charbon ayant adsorbé le solvant dans le désorbeur, à chauffer ledit charbon par de la vapeur, à réaliser la désorption proprement dite par de la vapeur, puis à évacuer le charbon ayant subi la désorption. Or, pendant la phase de chauffage de la charge par de la vapeur, ladite vapeur, arrivant sur un charbon relativement froid, se condense. L'eau liquide obtenue reste dans les grains de charbon ou sur les parois de l'adsorbeur ou coule au fond de l'adsorbeur. Pendant cette phase, il ne sort donc rien de l'adsorbeur et le système de récupération de l'énergie ne fonctionne pas.

Il est donc souhaitable, et cela constitue un perfectionnement de l'invention, qu'à un même système de récupération des calories contenues dans les vapeurs sortant de l'adsorbeur on associe au moins un autre adsorbeur et que l'on fasse fonctionner l'ensemble de façon que ledit système de récupération soit continuellement alimenté en vapeur, c'est-à-dire par exemple que, pendant que l'un des désorbeurs lié audit système est en phase de chauffage, l'autre désorbeur soit en phase active de désorption proprement dite.

L'invention concerne également un dispositif pour la mise en oeuvre du procédé; ledit dispositif comporte:

- un adsorbeur (4) dans lequel on réalise le traitement à la vapeur dudit charbon actif
- un condenseur recevant en vue de leur condensation les vapeurs sortant dudit adsorbeur
- un décanteur (8) recevant les liquides en provenance dudit condenseur
- un dispositif permettant de recycler l'eau en provenance dudit décanteur, et est caractérisé en ce que:

ledit condenseur est un condenseur indirect (6) recevant d'une part (5) les vapeurs provenant dudit adsorbeur et d'autre part (10) de l'eau impure en provenance dudit décanteur; les vapeurs produites dans ledit condenseur étant reprises par un éjecteur (2) et recyclées dans ledit adsorbeur.

L'invention, en ce qui concerne l'agencement des dispositifs, est représentée sur les schémas 1, 2 et 3.

Le schéma 1 représente le dispositif selon l'invention comportant un adsorbeur lié à un récupérateur de calories, ledit dispositif étant prévu de façon qu'une partie de l'eau impure soit recyclée dans l'échangeur indirect.

Le schéma 2 représente le dispositif selon l'invention dans lequel la totalité de l'eau impure est admise dans l'échangeur indirect.

Le schéma 3 représente un dispositif selon l'invention dans lequel, à un récupérateur de calories, on a associé deux adsorbeurs.

Sur le schéma 1, on a fait figurer:
- en 1 la chaudière productrice de vapeur, cette chaudière classique produit avantageusement une vapeur sous environ 8 à 16 bars de pression;
- en 2 un éjecteur dans lequel, en provoquant une détente de 8 à environ 1 à 1,5 bar de la vapeur en provenance de la chaudière, on entraîne de la vapeur à basse pression provenant, par la tuyauterie 3, de l'échangeur thermique indirect;
- en 4 l'adsorbeur; dans cet adsorbeur le solvant adsorbé sur le charbon actif est désorbé par de la vapeur d'eau provenant de l'éjecteur 2. Les distillats (mélange de vapeur d'eau et de vapeur de solvant) sortent de cet adsorbeur par la canalisation 5.

Les vapeurs sortant de l'adsorbeur par la canalisation 5 sont admises dans un échangeur thermique indirect 6 qui peut être avantageusement du type à film liquide à bon coefficient d'échange.

Dans cet échangeur les vapeurs provenant de 5 sont utilisées pour vaporiser l'eau impure admise par ailleurs dans le dit échangeur. Pour assurer cette vaporisation on doit opérer sous un vide partiel de sorte que la pression de la vapeur sortant de l'échangeur thermique indirect 6, est comprise entre 0,1 et 1 bar et de préférence entre 0,5 et 0,8 bar; ce vide partiel est bien évidemment assuré par l'éjecteur 2.

Les distillats provenant de 5 et non utilisés dans l'échangeur 6 finissent de se condenser dans un condenseur réfrigérant indirect 7 et le liquide refroidi obtenu est admis dans le décanteur 8 où, par simple décantation, il se forme une couche de solvant que l'on évacue et une couche d'eau impure, c'est-à-dire une eau qui, du fait qu'elle contient encore une certaine proportion de solvant, est impropre pour une utilisation directe dans la chaudière 1.

L'eau impure provenant du décanteur est stockée dans un bac de stockage 9. Ce stockage est souhaitable compte tenu du caractère discontinu de l'opération, ce caractère discontinu provenant de l'admission discontinue de la vapeur dans l'adsorbeur 4.

L'eau impure en provenance du bac de stockage est envoyée, d'une part, par la canalisation 10, pour alimenter en liquide froid l'échangeur thermique indirect 6 et, d'autre part, par la canalisation 11, pour alimenter un dispositif de traitement 12 qui débarrasse l'eau du solvant (et des ses éventuels produits de dégradation) qu'elle contient de façon à recycler l'eau pure obtenue dans la chaudière 1.

Le schéma 2 représente un mode de réalisation de l'invention dans lequel la totalité de l'eau impure sortant du décanteur est admise dans l'échangeur indirect qui joue alors le rôle d'épurateur et que l'excès d'eau liquide sortant dudit échangeur indirect est recyclé directement (sans purification complémentaire) dans la chaudière productrice de vapeur.

Sur ce schéma on retrouve les mêmes appareils que ceux utilisés sur le schéma 1 avec les mêmes références.

On notera toutefois que la totalité de l'eau impure provenant du décanteur 8, passe par un bac de stockage 9 et par le tuyau 14 est envoyée dans l'échangeur indirect 6. Dans cet échangeur ladite eau impure s'évapore et, dans le cas où l'impureté présente dans l'eau est plus volatile que l'eau, de l'eau pure se condense au fond de l'échangeur. Cette eau purifiée est ramenée par la tuyauterie 15 au bac de stockage 9; ledit bac de stockage est agencé de façon qu 'une partie de cette eau soit mélangée à l'eau impure provenant du décanteur et qu'une autre partie de cette eau soit recyclée directement par la tuyauterie 16 vers la chaudière productrice de vapeur 1.

Le schéma 3 reprend les mêmes éléments que ceux représentés sur le schéma 1, mais on remarquera que l'échangeur thermique indirect 6 est relié non seulement à l'adsorbeur 4 mais à un autre adsorbeur 13 qui travaille en parallèle (mais avec cycles décalés dans le temps) avec l'adsorbeur 4.

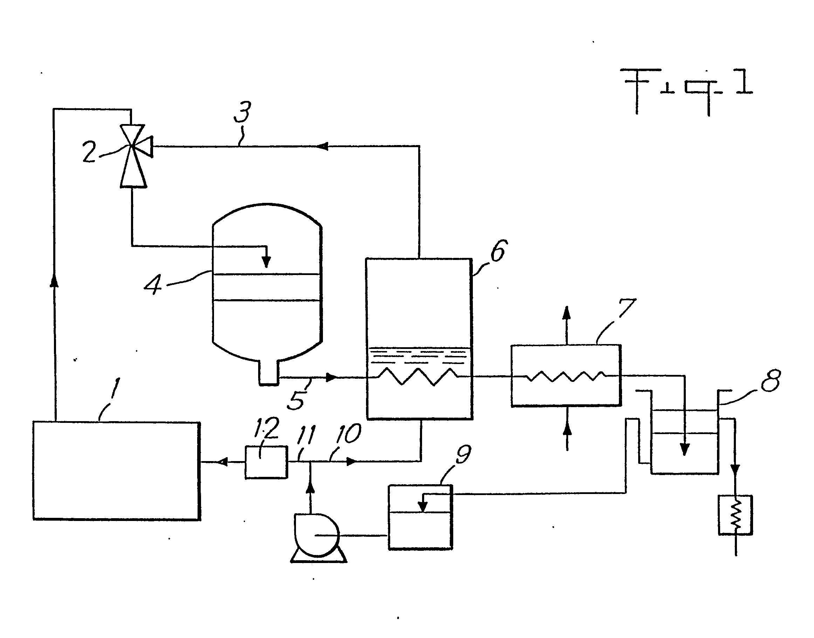

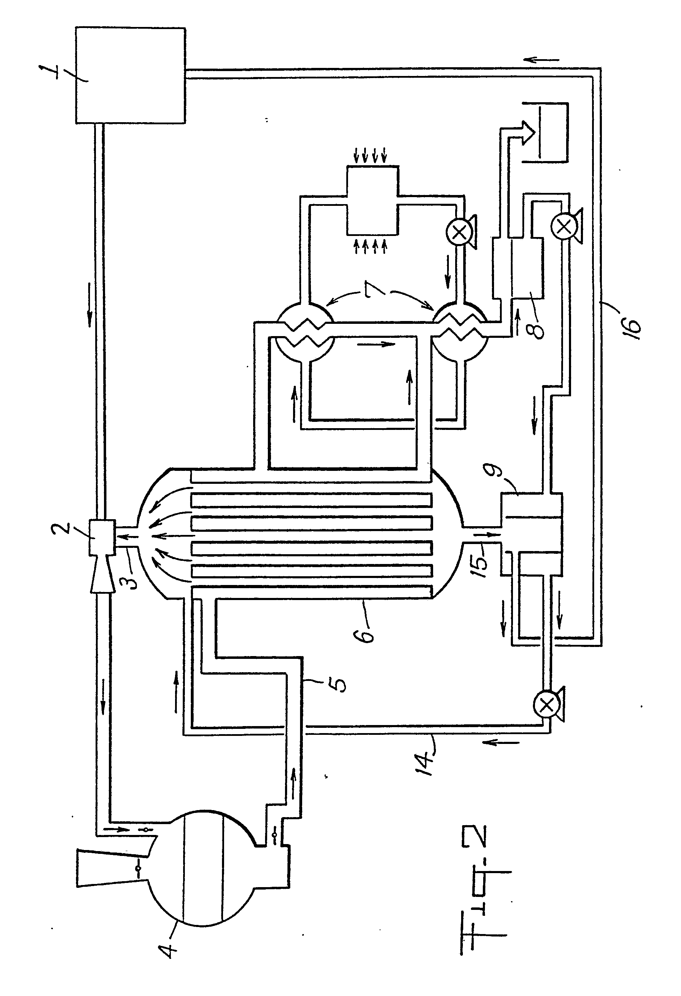

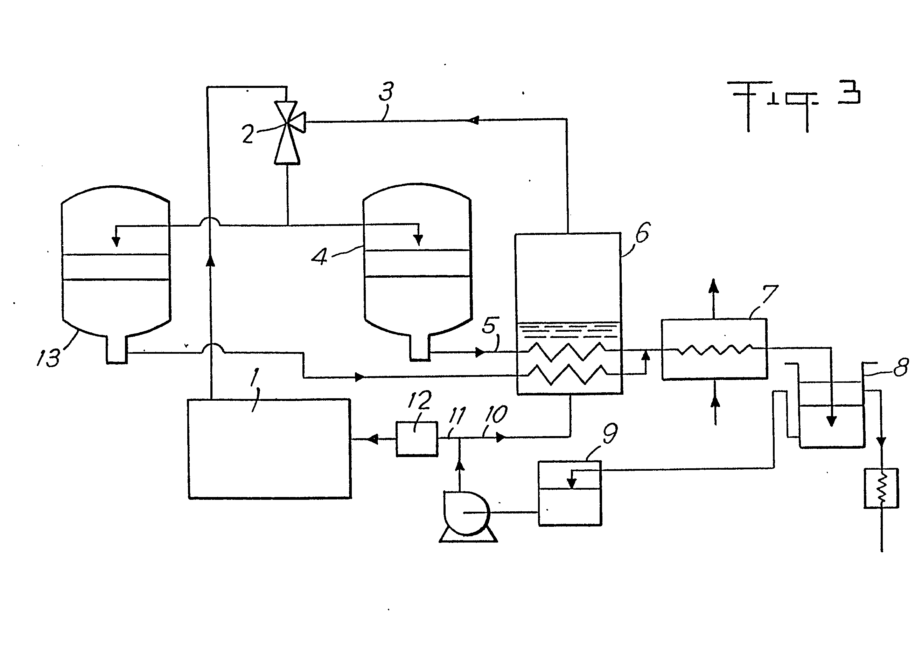

## Revendications

1. Procédé utilisable pour la régénération d'un charbon actif contenant au moins un solvant adsorbé, procédé selon lequel on traite dans un adsorbeur ledit charbon actif par de la vapeur d'eau avec condensation des vapeurs sortant dudit adsorbeur, décantation du produit condensé et recyclage de l'eau provenant de la décantation, ledit procédé étant caractérisé en ce que
- les vapeurs provenant dudit adsorbeur passent dans un échangeur indirect (6) dans lequel elles cèdent une part de leurs calories à une eau impure (10) en produisant de la vapeur d'eau impure à une pression comprise entre 0,1 et 1 bar, ladite vapeur étant reprise par un éjecteur et recyclée dans ledit adsorbeur,
- et l'on alimente ledit échangeur indirect avec de l'eau impure provenant du décanteur dans lequel ladite décantation a été réalisée.

2. Procédé selon la revendication 1, caractérisé en ce que l'on envoie dans ledit échangeur indirect une partie seulement de l'eau impure provenant du décanteur et que le reste de cette eau impure est purifiée dans un purificateur (12).

3. Procédé selon la revendication 1, caractérisé en ce que l'on envoie dans ledit échangeur indirect la totalité de l'eau impure provenant du décanteur, et que l'eau condensée sortant dudit échangeur est, d'une part, recyclée sur ledit échangeur indirect avec ladite eau impure et, d'autre part, envoyée directement, sans purification, au dispositif (2) de production de vapeur d'eau.

4. Procédé selon l'une des revendications 1 à 3, caractérisé en ce que ledit échangeur thermique indirect (6) est relié à deux adsorbeurs (4) et (13) qui fonctionnent avec des cycles décalés dans le temps.

5. Dispositif utilisable pour réaliser la régénération d'un charbon actif contenant au moins un solvant adsorbé, ladite régénération étant réalisée selon le procédé de l'une des revendications 1 à 4, comportant, comme connu,
- un adsorbeur (4) dans lequel on réalise le traitement à la vapeur dudit charbon actif
- un condenseur recevant en vue de leur condensation les vapeurs sortant dudit adsorbeur
- un décanteur (8) recevant les liquides en provenance dudit condenseur
- un dispositif permettant de recycler l'eau en provenance dudit décanteur
ledit dispositif étant caractérisé en ce que
ledit condenseur est un condenseur indirect (6) recevant d'une part (5) les vapeurs provenant dudit adsorbeur et d'autre part (10) de l'eau impure en provenance dudit décanteur; les vapeurs produites dans ledit condenseur étant reprises par un éjecteur (2) et recyclées dans ledit adsorbeur.

## Patentansprüche

1. Verfahren zum Regenerieren von Aktivkohle, die mindestens ein adsorbiertes Lösungsmittel enthält, bei welchem die Aktivkohle in einem Adsorber mittels Wasserdampf behandelt wird, wobei die den Adsorber verlassenden Dämpfe kondensiert, das kondensierte Produkt dekantiert und das von der Dekantation kommende Wasser rückgeführt wird, dadurch gekennzeichnet, daß
- die vom Adsorber kommenden Dämpfe in einen indirekten Austauscher (6) gelangen, in welchem sie einen Teil ihres Wärmegehalts an unreines Wasser (10) abgeben, wodurch Dampf von unreinem Wasser mit einem Druck zwischen 0,1 und 1 bar erzeugt wird, welcher Dampf von einem Ejektor aufgenommen und in den Adsorber rückgeführt wird,
- und man den indirekten Austauscher mit unreinem Wasser speist, welches vom Dekanter kommt, in dem die Dekantation durchgeführt wurde.

2. Verfahren nach Anspruch 1, dadurch gekennzeichnet, daß man in den indirekten Austauscher nur einen Teil des unreinen, vom Dekanter kommenden Wassers einbringt, und daß der Rest dieses unreinen Wassers in einem Purifikator (12) gereinigt wird.

3. Verfahren nach Anspruch 1, dadurch gekennzeichnet, daß man in den indirekten Austauscher das gesamte unreine, vom Dekanter kommende Wasser einbringt, und daß das den Austauscher verlassende, kondensierte Wasser einerseits zum indirekten Austauscher mit dem unreinen Wasser rückgeführt und anderseits ohne Reinigung direkt der Vorrichtung (2) zur Erzeugung von Wasserdampf zugeführt wird.

4. Verfahren nach einem der Ansprüche 1 bis 3, dadurch gekennzeichnet, daß der indirekte Wärmeaustauscher (6) mit zwei Adsorbern (4) und (13) verbunden ist, die mit zeitlich abgestuften Zyklen betrieben werden.

5. Vorrichtung zum Regenerieren von Aktivkohle, die mindestens ein adsorbiertes Lösungsmittel enthält, wobei die Regenerierung nach dem Verfahren gemäß einem der Ansprüche 1 bis 4 durchgeführt wird, welche in an sich bekannter Weise

- einen Adsorber (4), in dem die Behandlung der Aktivkohle mit Dampf erfolgt,
- einen die vom Adsorber kommenden Dämpfe zum Kondensieren derselben aufnehmenden Kondensator,
- einen die vom Kondensator kommenden Flüssigkeiten aufnehmenden Dekanter (8)
- und eine Einrichtung zum Rückführen des vom Dekanter kommenden Wassers

umfaßt, dadurch gekennzeichnet, daß der Kondensator ein indirekter Kondensator (6) ist, der einerseits (5) die vom Adsorber kommenden Dämpfe und anderseits (10) vom Dekanter kommmendes unreines Wasser aufnimmt, wobei die im Kondensator erzeugten Dämpfe von einem Ejektor (2) aufgenommen und in den Adsorber rückgeführt werden.

**Claims**

1. Process usable for regenerating an active charcoal containing at least one adsorbed solvent, process according to which said activated active charcoal is treated in an adsorber by steam with the steps of condensing vapours issuing from said adsorber, decanting the condensed product and recycling the water resulting from the decanting, said process being characterized in that:
- the vapours issuing from said adsorber pass through an indirect exchanger (6) in which they yield part of their calories to an impure water (10) while producing impure water vapour at a pressure of between 0.1 and 1 bar, said vapour being taken up by an ejector and recycled in said adsorber,
- and said indirect exchanger is supplied with impure water coming out of the decanter in which said decantation has been carried out.

2. Process according to claim 1, characterized in that part only of the impure water issuing from the decanter is sent into said indirect exchanger, and in that the remaining part of said impure water is purified in a purifier (12).

3. Process according to claim 1, characterized in that the whole impure water issuing from said decanter is sent into said indirect exchanger, and in that the condensed water coming out of said exchanger is on the one hand recycled on said indirect exchanger with said impure water and on the other hand directly sent, without purification, into the water vapour-producing device (2).

4. Process according to any one of claims 1 to 3, characterized in that said indirect thermal exchanger (6) is connected to two adsorbers (4) and (13) operating with cycles spaced out in time.

5. Device usable for regenerating an active charcoal containing at least one adsorbed solvent, said regeneration being carried out according to the process for any one of claims 1 to 4, comprising in known manner
- an adsorber (4) in which the vapour treatment of said active charcoal is conducted,
- a condenser receiving the vapour issuing from said adsorber for subsequent condensation thereof,
- a decanter (8) receiving the liquids coming out of said condenser,
- a device for recycling the water from said decanter,

said device being characterized in that said condenser is an indirect condenser (6) receiving on the one hand (5) the vapours issuing from said adsorber and on the other hand (10) impure water coming out of said decanter; the vapours produced in said condenser being taken up by an ejector (2) and recycled in said adsorber.

Fig. 1

Fig. 2

0 091 355

Fig. 3

0 091 355